# EUROPÄISCHE PATENTANMELDUNG

(11) **EP 1 199 836 A2**
(43) Veröffentlichungstag der Anmeldung: **24.04.2002**
(21) Anmeldenummer: 01123832.6
(22) Anmeldetag: 05.10.2001
(51) Int. Cl.: H04L 5/14

(54) **Bidirektionaler Bus-Repeater**

(30) Priorität: 18.10.2000 DE 10051591
(71) Anmelder: FESTO AG & Co, 73734 Esslingen (DE)
(72) Erfinder: Krämer, Joachim, 73257 Köngen (DE); Aichele, Alexander, 73760 Ostifildern (DE)
(74) Vertreter: Vetter, Hans, Dipl.-Phys. Dr.

(57) **Zusammenfassung**

Die Erfindung betrifft einen Bus-Repeater zur Ankoppelung von zumindest einem ersten Bus (20) an einen zweiten Bus (10), auf denen Daten durch serielle, digitale Signalpulsfolgen übertragen werden, mit zumindest einer ersten und einer zweiten Sende-/Empfangseinrichtung (41, 40), an die der erste bzw. der zweite Bus (20, 10) ankoppelbar sind und über die der Bus-Repeater (21, 31) von dem ersten Bus (20) empfangene Signalpulsfolgen auf den zweiten Bus (10) senden kann und umgekehrt. Für den Bus-Repeater (21, 31) wird vorgeschlagen, dass er Sperrmittel (80, 81) aufweist, die während des Sendens eines von dem ersten Bus (20) empfangenen Signalpulses auf den zweiten Bus (10) ein Senden des Bus-Repeaters von von dem zweiten Bus (10) empfangenen Signal-ulsen auf den ersten Bus (20) für eine Sendesperrzeit sperren und umgekehrt.

## Beschreibung

Die Erfindung betrifft einen Bus-Repeater zur Ankoppelung von zumindest einem ersten Bus an einen zweiten Bus, auf denen Daten durch serielle, digitale Signalpulsfolgen übertragen werden, mit zumindest einer ersten und einer zweiten Sende/Empfangseinrichtung, an die der erste bzw. der zweite Bus ankoppelbar sind und über die der Bus-Repeater von dem ersten Bus empfangene Signalpulsfolgen auf den zweiten Bus senden kann und umgekehrt.

Ein solcher Bus, auf dem Daten durch serielle, digitale Signalpulsfolgen übertragen werden, ist beispielsweise ein CAN-Bus (CAN = Controller Area Network). Auf dessen mit "CAN-High" und "CAN-Low" bezeichneten Übertragungsleitungen darf jeweils ein Teilnehmer digitale Signalpulsfolgen senden, die dann alle Teilnehmer einschließlich des sendenden Teilnehmers empfangen. Beim CAN-Protokoll wird bezüglich eines Signalpulses zwischen zwei logischen Zuständen unterschieden: die Bits sind entweder "rezessiv" (= logisch 1) oder "dominant" (= logisch 0). Wird ein dominantes Signal von mindestens einem Bus-Teilnehmer ausgesendet, dann werden rezessive Signale, die andere Teilnehmer gleichzeitig senden, überschrieben.

Typischerweise weist ein Bus eine Linientopolgie auf, bei der an mittels Abschlusswiderständen abgeschlossenen Busleitungen diverse Teilnehmer angeschlossen sind. Für manche Anwendungen ist es jedoch vorteilhaft, sogenannte vernetzte Systeme aufzubauen, bei denen Busse miteinander verknüpft werden. Im einfachsten Fall werden lediglich zwei Busse miteinander verknüpft. Bei komplizierteren Anwendungen weist die Bus-Anordnung eine baumartige Bus-Topologie auf, bei der z.B. von einem ersten Bus zwei weitere Busse verzweigen.

In jedem Fall ist zur Verkopplung zweier Busse ein sogenannter Bus-Repeater erforderlich, der die von einem Bus empfangenen Signalpulsfolgen in den anderen Bus sendet und umgekehrt. Bei bekannten Bus-Repeatern liest ein Mikrokontroller die von einem Bus über eine Bus-Schnittstelle empfangenen Signalpulsfolgen ein und sendet diese anschließend über eine weitere Bus-Schnittstelle an den zweiten Bus und umgekehrt. Üblicherweise werden dabei die Signalpulsfolgen ganzer Nachrichten (engl. messages) jeweils vollständig eingelesen, bevor sie an den zweiten Bus weitergesendet werden. Dadurch kommt es zu unerwünschten Verzögerungen bei der Signalübertragung zwischen den jeweils verkoppelten Bussen. Zudem sind die bekannten Bus-Repeater aufgrund der erforderlichen Mikrokontroller teuer.

Es ist daher Aufgabe der vorliegenden Erfindung, einen preisgünstigen und schnellen Bus-Repeater zu schaffen.

Zur Lösung dieser Aufgabe ist bei dem eingangs genannten Bus-Repeater erfindungsgemäß vorgesehen, dass er Sperrmittel aufweist, die während des Sendens eines von dem ersten Bus empfangenen Signalpulses auf den zweiten Bus ein Senden des Bus-Repeaters von von dem zweiten Bus empfangenen Signalpulsen auf den ersten Bus für eine Sendesperrzeit sperren und umgekehrt.

Der Erfindung liegt dabei der Gedanke zugrunde, nicht erst den Eingang einer eine Nachricht bildenden Signalpulsfolge abzuwarten, sondern die jeweiligen Signalpulse unmittelbar nach deren Empfang, ohne Verzögerung und ohne Zwischenspeicherung, von dem einen Bus in den jeweils anderen Bus zu übertragen. Beim CAN-Bus, der ein bevorzugtes Anwendungsgebiet für die Erfindung bildet, wird dabei ein Zustandswechsel rezessiv-dominant-rezessiv vom Bus-Repeater vom einen in den anderen Bus übertragen. Da jedoch der Bus-Repeater die von ihm dabei an den zweiten Bus gesendeten Signalpulse wieder empfängt, sozusagen mithört, würde er diese wieder an den ersten Bus zurückübertragen. Es käme sozusagen zu einem Kreisverkehr. Daher sind in dem erfindungsgemäßen Bus-Repeater Sperrmittel vorgesehen, die während des Sendens eines von dem ersten Bus empfangenen Signalpulses auf den zweiten Bus ein Senden von von dem zweiten Bus empfangenen Signalpulsen durch den Bus-Repeater auf den ersten Bus sperren und umgekehrt. Beim CAN-Bus sind die Sperrmittel während der Übertragung eines von dem ersten Bus empfangenen dominanten Signalpulses auf den zweiten Bus aktiv und umgekehrt.

Der Bus-Repeater ist kompakt bauend und kann aus preisgünstigen Komponenten gefertigt werden, so dass er z.B. in einen Verbindungsstecker zum Anschluss zweier oder mehrerer Busse integriert werden kann. Der Bus-Repeater kann aus diskreten Bauelementen oder in einer vorteilhaften Variante als integrierter Schaltkreis aufgebaut werden und erfordert dabei keine teueren Komponenten, wie z.B. Mikrokontroller. Ferner muss an dem Bus-Repeater keine Baudrate eingestellt werden, da sich dieser sozusagen automatisch an die jeweiligen Baudraten anpasst.

Vorteilhafte Aüsgestaltungen der Erfindung ergeben sich aus den abhängigen Ansprüchen.

Unter idealen Bedingungen weist ein Signalpuls senkrechte ansteigende und abfallende Signalflanken auf. Allerdings tritt in der Praxis bedingt durch Leitungskapazitäten der Busleitungen häufig das Problem auf, dass eine Signalflanke am Ende eines auf einem Bus gesendeten Signalpulses, beim CAN-Bus die Signalflanke vom dominanten in den rezessiven Zustand, z.B. in einer Exponentialfunktion ausläuft. Ein an den jeweiligen Bus angeschlossener Teilnehmer, also auch der Bus-Repeater, erkennt das Ende eines derart langsam abklingenden Signalpulses erst dann, wenn dieser eine vorbestimmte Spannungsschwelle unterschreitet. Somit sendet der Bus-Repeater einen z.B. vom ersten Bus empfangenen Signalpuls zwar für eine korrekte erste Signalpulsdauer an den zweiten Bus, empfängt diesen Signalpuls jedoch für eine durch das Abklingen verursachte, gegenüber der ersten Signalpulsdauer verlängerte zweite Signalpulsdauer von dem zweiten Bus. Damit der Bus-Repeater nicht aufgrund der Abklingzeit wieder das Anstehen eines zu übertragenden Signalpulses auf dem zweiten Bus ermittelt und diesen wieder an den ersten Bus zurück überträgt, sind in einer vorteilhaften Ausgestaltung der Erfindung die Sperrmittel derart ausgestaltet, dass sie die Sendesperrzeit für eine vorbestimmte Nachlaufzeit verlängern. Somit kann ein auf dem zweiten Bus noch verlängert anstehender Signalpuls abklingen, ohne dass der Bus-Repeater diesen Signalpuls fälschlicherweise wieder an den ersten Bus zurücksendet.

Durch das oben erläuterte Abklingen von Signalpulsen und damit durch deren Verlängerung, entstehen Wartezeiten, in denen der Bus-Repeater nicht erneut einen Signalpuls senden kann. Bei höheren Baudraten kann es dabei im Extremfall zu Wartezeiten kommen, die bei etwa 50 Prozent einer an sich vorgesehenen Länge des jeweiligen Signalpulses liegen. Daher weist der Bus-Repeater vorzugsweise Entlademittel zum Entladen des ersten Busses und/oder des zweiten Busses nach erfolgtem Senden eines Signalpulses auf dem ersten Bus bzw. dem zweiten Bus auf, so dass die Abklingzeit der Signalpulse verkürzt wird und erneut Signalpulse übertragen werden können. Beim CAN-Bus wird dabei ein Zustandswechsel von dominant auf rezessiv beschleunigt.

In einer bevorzugten Variante enthalten die Entlademittel einen zeitgesteuerten Kurzschlussschalter, beispielsweise einen Transistor.

Es ist auch möglich, dass die Entlademittel einen Spannungspegel erfassen, der nach dem Senden eines Signalpulses durch den Bus-Repeater an den jeweiligen Bus noch vorhanden ist, und nach Unterschreiten eines vorbestimmten Grenzwertes die Entlademittel wieder deaktivieren.

Die Entlademittel können während der gesamten Nachlaufzeit der Sperrmittel, aber auch nur während eines Teils der Nachlaufzeit aktiviert werden.

Insbesondere wenn die Entlademittel während der gesamten Nachlaufzeit der Sperrmittel aktiviert sind, ist es vorteilhaft, für die Entlademittel und die Sperrmittel zur Bildung eines Nachlaufzeit-Impulses einen gemeinsamen Zeitgeber vorzusehen.

Der Bus-Repeater ist zwar in einer bevorzugten Variante für den Betrieb von CAN-Bussen vorgesehen. Grundsätzlich können auch andere Busse, die ein ähnliches Betriebskonzept aufweisen wie CAN-Busse, mit einem erfindungsgemäß ausgestalteten Bus-Repeater betrieben werden.

Ein Ausführungsbeispiel der Erfindung ist in der Zeichnung dargestellt und wird in der nachfolgenden Beschreibung näher erläutert. Es zeigen:
- Figur 1: eine Anordnung mit baumartig angeordneten CAN-Bussen, die durch erfindungsgemäß gestaltete Bus-Repeater untereinander verbunden sind,
- Figur 2: ein Prinzip-Schaltbild eines Bus-Repeaters nach Figur 1,
- Figur 3a: prinzipielle Signalpulsverläufe ohne Einwirken von Entlademitteln und
- Figur 3b: prinzipielle Signalpulsverläufe unter Einwirkung von erfindungsgemäßen Entlademitteln.

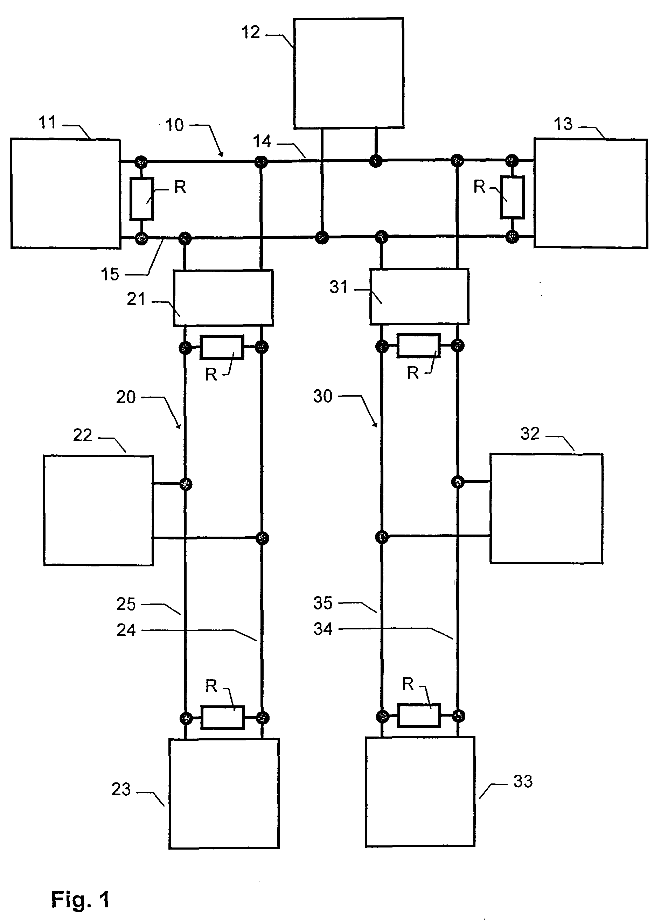

Figur 1 zeigt einen Bus 10, der vorliegend ein CAN-Bus ist, mit an diesen angeschlossenen Bus-Teilnehmern 11, 12 und 13. Bei den Bus-Teilnehmern 11, 12 und 13 handelt es sich beispielsweise um Steuergeräte für fluidtechnische Ventilanordnungen, die über den Bus 10 miteinander kommunizieren. An den Bus 10 sind ferner CAN-Busse 20 und 30 über vorliegend gleichartig aufgebaute Bus-Repeater 21 bzw. 31 angeschlossen. Der Bus 20 dient als Kommunikationsmedium für Bus-Teilnehmer 22, 23, während der Bus 30 Bus-Teilnehmer 32, 33 bedient. Die Bus-Teilnehmer 22, 23 sowie 32, 33 sind z.B. lokale Steuerungen, die den Bus-Teilnehmern 11 bzw. 13 zugeordnet sind. Die Busse 10, 20, 30 weisen Busleitungen 14 und 15, 24 und 25 bzw. 34 und 35 auf, die jeweils Bus-endseitig durch Abschlusswiderstände R abgeschlossen sind. Die Busleitung 14 dient als CANH-Leitung ("CAN-High"), die Busleitung 15 als CANL-Leitung ("CAN-Low"). Entsprechendes gilt für die Busleitungen 24 und 25 bzw. 34 und 35. Die CANH-Busleitungen 24, 34 sind über die Bus-Repeater 20 bzw. 30 mit der CANH-Busleitung 14, die CANL-Busleitungen 25, 35 entsprechend mit der CANL-Busleitung 15 verbunden. Bei der Übertragung eines dominanten Signalpulses (logisch "0") liegt zwischen den CANH- und CANL-Busleitungen eine Differenzspannung von z.B. 5V an, während im rezessiven Zustand (logisch "1") die Differenzspannung geringer als z.B. 0,5V ist.

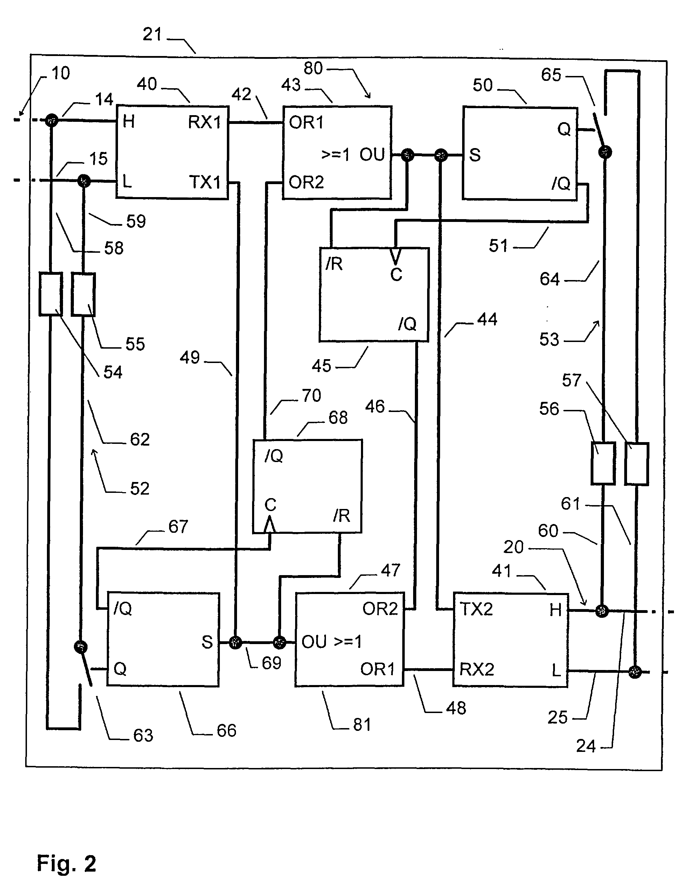

Figur 2 zeigt ein Prinzip-Schaltbild des Bus-Repeaters 21. Anschlüsse H und L einer Sende-/Empfangseinrichtung 40 sind an die Busleitungen 14 bzw. 15 angeschlossen. Die Sende-/Empfangseinrichtung 40 ist z.B. ein sogenannter Transceiver oder CAN-Controller-Schnittstellenbaustein (engl. CAN controller interface), z.B. ein Philips PCA82C250 oder ein Infineon TLE6252G. Die Sende-/Empfangseinrichtung 40 sendet auf dem Bus 10 serielle, digitale Signalpulsfolgen, die ihr an einem Eingang TX1 vorgegeben werden. Von dem Bus 10 empfangende Signalpulsfolgen gibt die Sende-/Empfangseinrichtung 40 an einem Ausgang RX1 aus. Dabei liegt bei einem dominanten Signal auf dem Bus 10 ein logischer Pegel "0" am Ausgang RX1 an, während die Sende-/Empfangseinrichtung 40 bei einem rezessiven Signal einen logischen Pegel "1" ausgibt. Eine der Sende-/Empfangseinrichtung 40 entsprechende Sende-/Empfangseinrichtung 41 dient als Schnittstellenbaustein zum Bus 20.

Über eine im Folgenden noch näher erläuterte, Sperrmittel 80, 81 umfassende Schaltmimik sind indirekt der Ausgang RX1 der Sende-/Empfangseinrichtung 40 mit dem Eingang TX2 der Sende-/Empfangseinrichtung 41 und deren Ausgang RX2 mit dem Eingang TX1 der Sende-/Empfangseinrichtung 40 ver-bunden, so dass der Bus-Repeater 21 von dem Bus 10 empfangene Signalpulsfolgen an den Bus 20 überträgt und umgekehrt. Die Sperrmittel 80 sperren eine Übertragung eines dominanten Signalpulses vom Bus 10 an den Bus 20, die Sperrmittel 81 eine Übertragung in umgekehrter Richtung.

Der Ausgang RX1 der Sende-/Empfangseinrichtung 40 führt über eine Verbindung 42 zu einem Eingang OR1 eines den Sperrmitteln 80 zugeordneten ODER-Glieds 43. Dessen Ausgang OU ist über eine Leitung 44 mit dem Eingang TX2 der Sende-/Empfangseinrichtung 41 verbunden. Das ODER-Glied 43 sperrt die Übertragung eines dominanten Signals (logisch "0") vom Ausgang RX1 der Sende-/Empfangseinrichtung 40 an den Eingang TX2 der Sende-/Empfangseinrichtung 41, sofern an seinem Eingang OR2 ein logischer Pegel "1" anliegt, der von dem Ausgang RX2 der Sende-/Empfangseinrichtung 41 ausgehend gesteuert wird.

Im Folgenden wird der weitere Aufbau der Schaltung nach Figur 2 sowie deren Funktionsweise anhand einer Übertragung eines dominanten Signalpulses vom Bus 10 an den Bus 20 erläutert, wobei von einem Ruhezustand ausgegangen wird, bei dem unmittelbar vor der Übertragung des Signalpulses keine Datenübertragung stattgefunden hat und bei dem an den Ausgängen RX1 und RX2 somit die logischen Pegel 1 anliegen.

Bei Eingang des dominanten Signalpulses vom Bus 10 gibt der Ausgang RX1 der Sende-/Empfangseinrichtung 40 einen Pegelwechsel von logisch 1 nach 0 aus, der zu einem Ausgangssignal 0 am Ausgang OU des ODER-Glieds 43 führt, da dessen Eingang OR2 aufgrund des der Übertragung des Signalpulses vorangegangenen Ruhezustandes ebenfalls auf 0 liegt. Durch den Pegelwechsel am Ausgang OU des ODER-Glieds 43 wird der Eingang TX2 der Sende-/Empfangseinrichtung 41 auf 0 gesetzt, so dass diese ein dominantes Signal, also eine Differenzspannung an den Bus 20 sendet. Ferner wird von dem Ausgang OU ein an die Leitung 44 angeschlossener invertierter Reset-Eingang /R eines den Sperrmitteln 81 zugeordneten Halteglieds 45, beispielsweise eines JK-Flip-Flops (z.B. 74HC74), auf 0 gesetzt. An dessen invertierendem Ausgang /Q liegt dann ein Pegel 1 an, der über eine Leitung 46 an einen Eingang OR2 eines den Sperrmitteln 81 für den Übertragungsweg von Bus 20 an den Bus 10 zugeordneten ODER-Glieds 47 ausgegeben wird, so dass dieses - unabhängig vom jeweiligen Pegel 0 oder 1 an seinem Eingang OR1 - an seinem Ausgang OU einen Pegel 1 ausgibt. Selbst wenn der Ausgang RX2 der Sende-/Empfangseinrichtung 41 über eine Leitung 48 einen Pegel 0, also einen dominanten Zustand, an den Eingang OR1 des ODER-Glieds 47 anlegt, liegt an dessen Ausgang OU ein Pegel 1 an, also ein rezessiver Zustand, der über eine Leitung 48 an Eingang TX1 der Sende-/Empfangseinrichtung 40 ausgegeben wird.

Die Sende-/Empfangseinrichtung 41, empfängt dann zwar das soeben von ihr gesendete dominante Signal und gibt dieses als Pegel 0 an seinem Ausgang RX2 aus, das ohne die Sperr-mittel 81 zu einem Senden eines dominanten Signals an Bus 10 führen würde. Jedoch wird die Rückübertragung des dominanten Pegels 0 an die Sende-/Empfangseinrichtung 40 durch das ODER-Glied 47 für eine Sendesperrzeit verhindert, die zu-mindest während des Sendevorgangs des Signalpulses von Bus 10 an Bus 20 läuft.

Es versteht sich, dass für diese Sperrfunktion auch andere elektrische Komponenten verwendet werden könnten, beispielsweise könnte anstatt des Halteglieds 45 ein invertierendes Glied eingesetzt werden. Ferner könnte auch die Logik andersartig aufgebaut werden.

Am Ende des dominanten Signalpulses vom Bus 10 gibt der Ausgang RX1 der Sende-/Empfangseinrichtung 40 einen Pegelwechsel von logisch 0 nach 1 aus, der zu einem Ausgangssignal 1 am Ausgang OU des ODER-Glieds 43 führt. Durch diese ansteigende Signalflanke beendet die Sende-/Empfangsein-richtung 41 ihren Sendevorgang und wird ein den Sperrmitteln 81 zugeordnetes Zeitglied ("Timer") 50 gestartet, dessen Eingang S über die Leitung 44 mit dem Ausgang OU des ODER-Glieds 43 verbunden ist. Ferner wird vom Ausgang OU die ansteigende Signalflanke und somit ein Pegel 1 an den Eingang /R des Halteglieds 45 ausgegeben. Dadurch wird dessen Reset-Zustand wieder aufgehoben und ein taktgesteuerter Betrieb über dessen Takt-Eingang C wieder möglich.

Zunächst gibt das Halteglied 45 jedoch weiter einen Pegel 1 an seinem Ausgang /Q aus, so dass das ODER-Glied 47 weiterhin das Senden dominanter Signale vom Bus 20 an den Bus 10 sperrt. Das Zeitglied 50 gibt für eine vorbestimmte Zeit weiter an seinem über ein Leitung 51 mit dem Takt-Eingang C des Halteglieds 45 Ausgang /Q einen Pegel 0 aus, so dass das Halteglied 45 weiterhin an seinem Ausgang /Q einen Pegel 1 ausgibt und das ODER-Glied 47 eine Übertragung eines dominanten Pegels 0 von der Sende-/Empfangseinrichtung 41 an die Sende-/Empfangseinrichtung 40 für eine die Sendesperr-zeit verlängernde vorbestimmte Nachlaufzeit weiterhin ver-hindert.

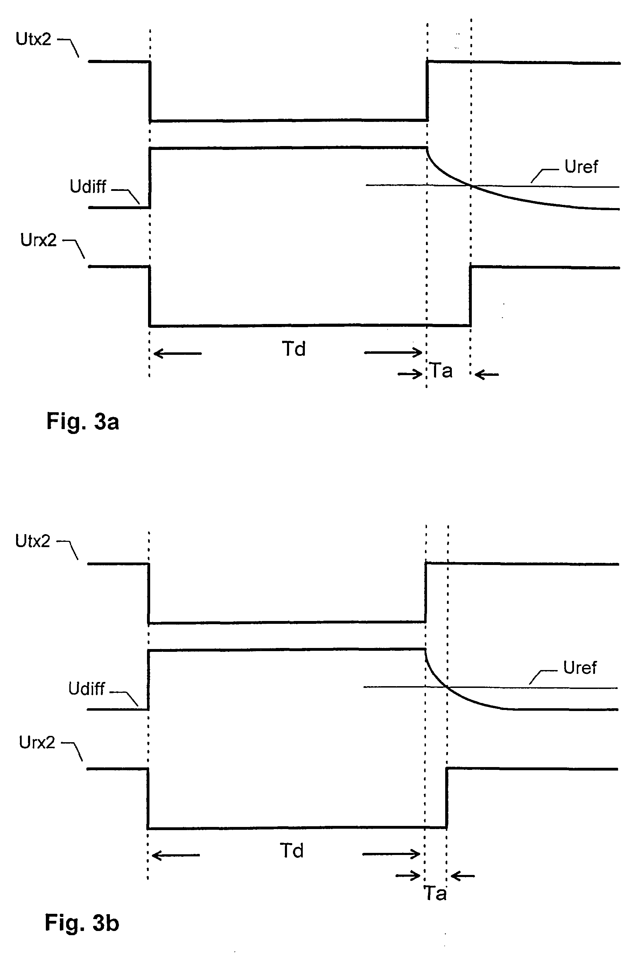

Die Nachlaufzeit ist an dem Zeitglied 50 einstellbar, beispielsweise entsprechend dem zeitlichen Verhalten des jeweiligen Busses. Ein solches Verhalten soll anhand von Figur 3a erläutert werden. Dort ist ein mit Utx2 bezeichneter Signalverlauf dargestellt, der einen Signalpuls mit einem Pegelwechsel rezessiv-dominant-rezessiv am Eingang Tx2 der Sende/Empfangseinrichtung 41 zeigt. Die Dauer des Signalpulses ist mit Td bezeichnet. Die Sende-/Empfangseinrichtung 41 sendet diesen Signalpuls als eine Differenzspannung Udiff an den Bus 20. Die ansteigende Signalflanke der Differenz-spannung Udiff steigt zunächst in idealer Weise steil an und erreicht den dominanten Pegel beispielsweise beim erwähnten PCA82C250 bereits nach ca. 50 Nanosekunden. Die Differenz-spannung Udiff wird von der Sende-/Empfangseinrichtung 41 wieder empfangen und am Ausgang RX2 als Signalverlauf Urx2 ausgegeben. Der dominanten Zustand des Signals Urx2 ist dabei sehr schnell erreicht, beim PCA82C250 z.B. nach ca. 300 Nanosekunden. In Figur 3a sind jedoch die genannten kurzen Verzögerungen im Nanosekundenbereich aus Gründen der Verein-fachung nicht gezeigt.

Nach Ablauf der Signalpulsdauer Td steigt der Eingabepegel Utx2 wieder zum rezessiven Zustand (Pegel 1) an und die Sende-/Empfangseinrichtung 41 sendet idealerweise eine senkrecht abfallende Differenzspannung Udiff an den Bus 20. Allerdings weist dieser Leitungskapazitäten auf, so dass die Differenz-spannung Udiff nicht in einer idealen senkrechten Flanke abfällt, sondern in einer durch die Leitungskapazitäten bedingten Exponentialfunktion. Erst wenn die Differenzspannung Udiff nach einer Abklingdauer Ta einen Referenzspannungswert Uref unterschreitet, erkennt die Sende-/Empfangseinrichtung 41, dass ein Signalwechsel dominant-rezessiv stattgefunden hat. Somit gibt die Sende-/Empfangseinrichtung 41 nicht einen Signalpuls mit einer Dauer Td, sondern einen um die Abklingdauer Ta verlängerten Signalpuls mit einer Dauer Td + Ta aus. Die an dem Zeitglied 50 einzustellende Nachlaufzeit ist demnach zumindest gleich lang einzustellen wie die Abklingdauer Ta.

Zur Verkürzung der Abklingdauer Ta sind bei dem Bus-Repeater 21 Entlademittel 52, 53 vorgesehen, so dass sich die in Figur 3b schematisch dargestellten Signalverläufe einstellen. Durch die Entlademittel 52, 53 werden die Busse 10 bzw. 20 im Anschluss an einen Signalpuls aktiv entladen, den die Sende-/Empfangseinrichtungen 40 bzw. 41 jeweils gesendet haben.

Die Entlademittel 52, 53 umfassen Entlade-Widerstände 54, 55 bzw. 56, 57, die über Leitungen 58, 59 bzw. 60, 61 an die Busleitungen 14, 15 bzw. 24, 25 angeschlossen sind. Vom Widerstand 54 führt eine Leitung 62 über einen Kurzschlussschalter 63 zum Widerstand 55, vom Widerstand 56 führt eine Leitung 64 über einen Kurzschlussschalter 65 zum Widerstand 57. Die Kurzschlussschalter 63, 65 sind beispielsweise Transistoren. Der Kurzschlussschalter 65 ist mit einem Ausgang Q des Zeitgliedes 50 verbunden und wird durch dieses während der die Sendesperrzeit von Bus 20 nach Bus 10 verlängernden Nachlaufzeit betätigt, so dass er als zeitgesteuerter Kurzschlussschalter wirkt. Demnach wird der Kurzschlussschalter 65 solange betätigt, wie das als Sperrmittel dienende ODER-Glied 47 gesteuert durch das Halteglied 45 in Sperrstellung verbleibt.

Die Wirkung der Entlademittel 53, nämlich die Verkürzung der Abklingdauer Ta, ist in Figur 3b schematisch gezeigt. Durch die Verkürzung der Abklingdauer Ta verkürzt sich auch die Sperrzeit für ein anschließendes Senden eines Signalpulses von Bus 20 an Bus 10.

Prinzipiell könnte der Kurzschlussschalter 65 auch nur während eines Teils der besagten Nachlaufzeit betätigt werden oder bei Erreichen einer Schaltschwelle ausgeschaltet werden, z.B. bei Erreichen der in den Figuren 3a, 3b eingezeichneten Spannung Uref. Ferner könnten für die Einstellung der Nachlaufzeit und für die Aktivierung der Entlademittel separate Zeitgeber vorgesehen sein.

Die für eine gesicherte Übertragung eines Signalpulses vom Bus 20 an den Bus 10 in dem Bus-Repeater 21 vorgesehenen Mittel entsprechen in Aufbau und Funktion im Wesentlichen denen, die bereits anhand einer Übertragung eines Signalpulses vom Bus 10 an den Bus 20 erläutert wurden, so dass eine eingehende Erklärung nicht notwendig ist. Den Sperrmitteln 80 ist ein Zeitglied 66 zugeordnet, das funktional dem Zeitglied 50 entspricht und daher eingangseitig über eine Leitung 69 an den Ausgang OU des ODER-Glieds 47 angeschlossen ist und ausgangsseitig zum Einen den Kurzschlussschalter 63 betätigt und zum Andern über eine Leitung 67 einen Takteingang C eines den Sperrmitteln 80 zugeordneten Haltegliedes 68 steuert. Dessen Reset-Eingang /R ist über die Leitung 69 mit dem Ausgang OU des ODER-Glieds 47 verbunden und dessen Ausgang /Q über eine Leitung 70 mit dem Eingang OR2 des ODER-Gliedes.

Somit weist der Bus-Repeater 21 Mittel auf, die dessen Übertragungswege vom Bus 10 an den Bus 20 und umgekehrt bei der Übertragung eines Signalpulses wechselseitig verriegeln und anschließend wieder freigeben.

| | | | |
|---|---|---|---|
| 1 | | 41 | Sende-/Empfangseinrichtung |
| 2 | | 42 | Verbindung |
| 3 | | 43 | ODER-Glied |
| 4 | | 44 | Verbindung |
| 5 | | 45 | Halteglied |
| 6 | | 46 | Leitung |
| 7 | | 47 | ODER-Glied |
| 8 | | 48 | Leitung |
| 9 | | 49 | Leitung |
| 10 | Bus | 50 | Zeitglied |
| 11 | Bus-Teilnehmer | 51 | Leitung |
| 12 | Bus-Teilnehmer | 52 | Entlademittel |
| 13 | Bus-Teilnehmer | 53 | Entlademittel |
| 14 | CANH-Busleitung | 54 | Entladewiderstand |
| 15 | CANL-Busleitung | 55 | Entladewiderstand |
| 16 | | 56 | Entladewiderstand |
| 17 | | 57 | Entladewiderstand |
| 18 | | 58 | Leitung |
| 19 | | 59 | Leitung |
| 20 | Bus | 60 | Leitung |
| 21 | Bus-Repeater | 61 | Leitung |
| 22 | Bus-Teilnehmer | 62 | Leitung |
| 23 | Bus-Teilnehmer | 63 | Kurzschlussschalter |
| 24 | CANH-Busleitung | 64 | Leitung |
| 25 | CANL-Busleitung | 65 | Kurzschlussschalter |
| 26 | | 66 | Zeitglied |
| 27 | | 67 | Leitung |
| 28 | | 68 | Halteglied |
| 29 | | 69 | Leitung |
| 30 | Bus | 70 | Leitung |
| 31 | Bus-Repeater | | |
| 32 | Bus-Teilnehmer | | |
| 33 | Bus-Teilnehmer | | |
| 34 | CANH-Busleitung | | |
| 35 | CANL-Busleitung | | |
| 36 | | | |
| 37 | | | |
| 38 | | R | Abschlußwiderstände |
| 39 | | | |
| 40 | Sende-/Empfangseinrichtung | | |

## Patentansprüche

1. Bus-Repeater zur Ankoppelung von zumindest einem ersten Bus (20) an einen zweiten Bus (10), auf denen Daten durch serielle, digitale Signalpulsfolgen übertragen werden, mit zu-mindest einer ersten und einer zweiten Sende-/Empfangseinrichtung (41, 40), an die der erste bzw. der zweite Bus (20, 10) ankoppelbar sind und über die der Bus-Repeater (21, 31) von dem ersten Bus (20) empfangene Signalpulsfolgen auf den zweiten Bus (10) senden kann und umgekehrt, **dadurch gekennzeichnet, dass** der Bus-Repeater (21, 31) Sperrmittel (80, 81) aufweist, die während des Sendens eines von dem ersten Bus (20) empfangenen Signalpulses auf den zweiten Bus (10) ein Senden des Bus-Repeaters von von dem zweiten Bus (10) empfangenen Signalpulsen auf den ersten Bus (20) für eine Sendesperrzeit sperren und umgekehrt.

2. Bus-Repeater nach Anspruch 1, **dadurch gekennzeichnet, dass** die Sperrmittel (80, 81) derart ausgestaltet sind, dass sie die Sendesperrzeit für eine vorbestimmte Nachlaufzeit (Ta) verlängern.

3. Bus-Repeater nach Anspruch 1 oder 2, **dadurch gekennzeichnet, dass** er Entlademittel (52, 53) zum Entladen des ersten Busses (20) und/oder des zweiten Busses (10) nach erfolgtem Senden eines Signalpulses auf dem ersten Bus (20) bzw. dem zweiten Bus (10) aufweist.

4. Bus-Repeater nach Anspruch 3, **dadurch gekennzeichnet, dass** die Entlademittel (52, 53) einen zeitgesteuerten Kurzschlussschalter (63, 65) enthalten.

5. Bus-Repeater nach Anspruch 3 oder 4, **dadurch gekennzeichnet, dass** die Entlademittel (52, 53) durch einen Spannungspegel (Uref) steuerbar sind, der nach dem Senden eines Signalpulses durch den Bus-Repeater (21, 31) auf dem jeweiligen ersten oder zweiten Bus (20, 10) noch vorhanden ist.

6. Bus-Repeater nach einem der Ansprüche 3 bis 5, **dadurch gekennzeichnet, dass** er die Entlademittel (52, 53) zumindest während eines Teils der Nachlaufzeit (Ta), vorzugsweise während der gesamten Nachlaufzeit (Ta) aktiviert.

7. Bus-Repeater nach Anspruch 6, **dadurch gekennzeichnet, dass** zur Aktivierung der Entlademittel (52, 53) und zur Bildung eines Nachlaufzeit-Impulses für die Sperrmittel (80, 81) ein gemeinsamer Zeitgeber (50, 66) vorgesehen ist.

8. Bus-Repeater nach einem der vorhergehenden Ansprüche, **dadurch gekennzeichnet, dass** er von dem ersten Bus (20) empfangene Signalpulse ohne Zwischenspeicherung auf den zweiten Bus (10) sendet und umgekehrt.

9. Bus-Repeater nach einem der vorhergehenden Ansprüche, **dadurch gekennzeichnet, dass** er auf dem ersten und dem zweiten Bus (20, 10) jeweils von ihm gesendete Signalpulse wieder empfängt.

10. Bus-Repeater nach einem der vorhergehenden Ansprüche, **dadurch gekennzeichnet, dass** der erste und der zweite Bus (20, 10) CAN-Busse sind.

11. Bus-Repeater nach Anspruch 10, **dadurch gekennzeichnet, dass** die Sperrmittel (80, 81) während der Übertragung eines von dem ersten Bus (20) empfangenen dominanten Signalpulses auf den zweiten Bus (10) aktiviert sind und umgekehrt.

12. Bus-Repeater nach Anspruch 10 oder 11, **dadurch gekennzeichnet, dass** er die Entlademittel (52, 53) beim Übergang eines dominanten auf einen rezessiven Signalpegel aktiviert.

13. Bus-Repeater nach einem der vorhergehenden Ansprüche, **dadurch gekennzeichnet, dass** die Sperrmittel (80, 81) zur wechselseitigen Verriegelung zumindest ein erstes und ein zweites ODER-Glied (47, 43) aufweisen, wobei ein erster Eingang (OR1) des ersten ODER-Gliedes (47) einem Empfangs-Ausgang (RX2) der ersten Sende-/Empfangseinrichtung (41) und ein erster Eingang (OR1) des zweiten ODER-Gliedes (43) einem Empfangs-Ausgang (RX1) der zweiten Sende-/Empfangseinrichtung (40) verbunden ist und wobei der Ausgang (OU) des zweiten ODER-Gliedes (43) zumindest indirekt mit einem zweiten Eingang (OR2) des ersten ODER-Gliedes (47) und der Ausgang (OU) des ersten ODER-Gliedes (47) zumindest indirekt mit einem zweiten Eingang (OR2) des zweiten ODER-Gliedes (43) verbunden ist.

14. Bus-Repeater nach einem der vorhergehenden Ansprüche, **dadurch gekennzeichnet, dass** er als integrierter Schaltkreis aufgebaut ist.

15. Bus-Stecker mit einem Bus-Repeater nach einem der vorhergehenden Ansprüche.
